# EUROPÄISCHE PATENTSCHRIFT

(11) **EP 0 991 686 B1**
(45) Veröffentlichungstag und Bekanntmachung des Hinweises auf die Patenterteilung: **09.01.2002**
(21) Anmeldenummer: 98929365.9
(22) Anmeldetag: 22.05.1998
(51) Int. Cl.: C08G 18/48, C08G 18/50, C08J 9/12, C08J 9/14

(54) **VERFAHREN ZUR HERSTELLUNG VON GESCHLOSSENZELLIGEN POLYURETHAN-HARTSCHAUMSTOFFEN MIT GERINGER WÄRMELEITFÄHIGKEIT**
METHOD FOR PRODUCING CLOSED-CELL RIGID POLYURETHANE FOAMS HAVING LOW THERMAL CONDUCTIVITY
PROCEDE DE PRODUCTION DE MOUSSES RIGIDES DE POLYURETHANNE A ALVEOLES FERMEES A FAIBLE CONDUCTIBILITE THERMIQUE

(30) Priorität: 03.06.1997 DE 19723193
(43) Veröffentlichungstag der Anmeldung: 12.04.2000
(73) Patentinhaber: Bayer Aktiengesellschaft, 51368 Leverkusen (DE)
(72) Erfinder: HEINEMANN, Torsten, D-51065 Köln (DE); DIETRICH, Werner, D-51519 Odenthal (DE); KLÄN, Walter, D-51373 Leverkusen (DE)
(86) Internationale Anmeldenummer: EP9803039
(87) Internationale Veröffentlichungsnummer: WO9855528

(56) Entgegenhaltungen:
- EP-A- 0 443 158
- WO-A-97/16477
- US-A- 5 173 517
- H.YOSHIMURA, ET AL.: "An insight into the characteristics of a nucleation catalyst in CFC-free rigid foam systems" 35TH ANNUAL POLYURETHANE TECHNICAL/MARKETING CONFERENCE, 9. - 12.Oktober 1994, Seiten 300-310, XP000654827

## Beschreibung

Polyurethan-Hartschaumstoffe finden aufgrund ihrer geringen Wärmeleitfähigkeit Anwendung bei der Dämmung von Kühl- und Gefriergeräten, von industriellen Anlagen, Tanklagern, Rohrleitungen, im Schiffsbau sowie in der Bauindustrie. Eine zusammenfassende Übersicht über Herstellung von Polyurethan-Hartschaumstoffen und ihre Verwendung findet sich im Kunststoff-Handbuch, Band 7 (Polyurethane), 2. Auflage 1983, herausgegeben von Dr. Günter Oertel (Carl Hanser Verlag, München).

Die Wärmeleitfähigkeit eines weitgehend geschlossenzelligen Polyurethan-Hartschaumstoffes ist in starkem Maße abhängig von der Art des verwendeten Treibmittels bzw. Zellgases. Als besonders geeignet hatten sich hierfür die vollhalogenierten Fluorchlorkohlenwasserstoffe (FCKW) erwiesen, insbesondere Trichlorfluormethan (R11), welches eine besonders geringe Wärmeleitfähigkeit aufweist, Diese Stoffe sind chemisch inert und ungiftig. Vollhalogenierte Fluorchlorkohlenwasserstoffe gelangen jedoch infolge ihrer hohen Stabilität in die Stratosphäre, wo sie aufgrund ihres Gehaltes an Chlor zum Abbau des dort vorhandenen Ozons beitragen (Molina, Rowland, Nature 249 (1974) 810).

Als Ersatz für Fluorchlorkohlenwasserstoffe wurde vorgeschlagen Hydrofluoralkane wie z.B. R 141b (Dichlorfluorethan) als Treibmittel zu verwenden (US PS 5272183).

Weiter wurde vorgeschlagen (EP 344 537, US-PS 4 931 482), als Treibmittel teilfluorierte Kohlenwasserstoffe (Hydrofluoralkane), die noch mindestens eine Kohlenstoff-Wasserstoff-Bindung aufiveisen, zu verwenden. Stoffe dieser Verbindungsklasse enthalten keine Chloratome und weisen infolgedessen einen ODP-Wert (Ozone Depletion Potential) von Null auf (zum Vergleich: R11: ODP = 1). Typische Vertreter dieser Substanzklasse sind z.B. 1,1,1,4,4,4-Hexafluorbutan (R356) oder 1,1,1,3,3-Pentafluorpropan (245fa).

Weiterhin ist aus der EP 0 421 269 bekannt Cyclopentan oder Cyclopentan in Mischung mit anderen Alkanen wie z.B. i-Butan, n-Butan, n-Pentan oder iso-Pentan als Treibmittel zu verwenden.

Je nach eingesetztem Treibmittel muß die Polyolformulierung modifiziert werden, um Polyurethan-Hartschaumstoffe vergleichbarer geringer Wärmeleitfähigkeit zu erhalten. Wünschenswert wären daher Polyolformulierungen, die bei Verwendung unterschiedlicher Treibmittelsysteme Hartschaumstoffe ähnlicher Wärmeleitfähigkeit ergeben, ohne daß hierfür auch aus Kostengründen ungünstige Rezepturänderungen oder Änderungen der maschinellen Parameter an der Verschäumungsrezeptur notwendig werden.

Aufgabe der vorliegenden Erfindung war es daher, ein Verfahren zur Herstellung geschlossenzelliger Polyurethan-Hartschaumstoffe mit geringer Wärmeleitfähigkeit aufzufinden, bei dem auch bei Verwendung unterschiedlicher Treibmittelsysteme Polyurethan-Hartschaumstoffe mit ähnlich geringer Wärmeleitfähigkeit erhalten werden können.

Überraschenderweise wurden nun Polyolformulierungen gefunden, welche mit allen genannten Ersatzstoffen für Fluorchlorkohlenwasserstoffe, insbesondere Cyclopentan, Cyclopentan/i-Butan- Mischungen, Cyclopentan/i-Pentan- Mischungen, R 141 b, R 245 fa verschäumt werden können und immer Polyurethanhartschaumstoffe mit ähnlich geringer Wärmeleitfähigkeit und hervorragendem Eigenschaftsprofil ergeben, die sich insbesondere zur Dämmung von Kühl- und Gefriergeräten eignen. Dies ist für den Verarbeiter solcher Formulierungen besonders vorteilhaft, da bei einem eventuellem Treibmittelwechsel, z.B. aus gesetzlichen Gründen, keine besondere Anpassung maschineller Parameter und keine Änderung der Lagerhaltung erforderlich wird und somit ein Treibmittelwechsel schnell und kostengünstig durchgeführt werden kann.

Gegenstand der Erfindung ist ein Verfahren zur Herstellung von geschlossenzelligen Pölyurethan Hartschaumstoffen mit geringer Wärmeleitfähigkeit aus Polyolen und Polyisocyanaten sowie Treibmitteln und gegebenenfalls Schaumhilfsmitteln, dadurch gekennzeichnet, daß der Polyurethan-Hartschaumstoff erhalten wird durch Umsetzung von
A. einer Polyolkomponente, enthaltend
   (1) 40 - 80 Gew.-% eines auf Sucrose oder Sorbitol basierenden Polyethylenoxid/propylenoxidpolyethers der Molmasse 300 - 800,
   (2) 3 - 40 Gew.-% eines auf einem aromatischem Mono-, Di- oder Polyamin basierendem Polyethylenoxid/propylenoxidpolyethers der Molmasse 300 - 800,
   (3) 3 - 40 Gew.-% eines auf einem aliphatischem Mono-, Di- oder Polyamin basierendem Polyethylenoxid/propylenoxidpolyethers der Molmasse 200 - 800,
   (4) 3 - 40 Gew.-% eines linearen Polyethylenoxid/propylenoxidpolyethers der Molmasse 500 - 1 500,
   (5) gegebenenfalls weitere, mindestens zwei gegenüber Isocyanaten reaktive Wasserstoffatome aufweisenden Verbindungen vom Molekulargewicht 150 bis 12 500 g/Mol
   (6) Katalysatoren,
   (7) Wasser,
   (8) Treibmitteln aus der Gruppe der Alkane, Cycloalkane, Hydrofluorchlorkohlenwasserstoffe, Hydrofluorkohlenwasserstoffe und
   (9) gegenbenenfalls Hilfs- und/oder Zusatzstoffen mit
B. einem gegebenenfalls modifizierten Polyisocyanat mit einem NCO-Gehalt von 20 bis 48 Gew.-%.

Erfindungsgemäß eingesetzte Polyolformulierungen enthalten eine, mindestens zwei gegenüber Isocyanaten reaktive Wasserstoffatome aufweisende Verbindungen vom Molekulargewicht 300 bis 800 g/Mol. Sie werden erhalten durch Polyaddition von Alkylenoxiden wie beispielsweise Ethylenoxid, Propylenoxid, Butylenoxid, Dodecyloxid oder Styroloxid, vorzugsweise Propylenoxid oder Ethylenoxid an Starterverbindungen. Als Starterverbindungen werden mehrwertige Alkohole wie Sucrose und Sorbitol sowie Mischungen dieser Alkohole mit Wasser, Glycerin, Propylenglykol, Ethylenglykol oder Diethylenglykol verwendet. Mittels dieser erfindungsgemäß zu verwendenen Polyole können die in der Praxis üblicherweise geforderten mechanischen Eigenschaften der Polyurethan-Hartschaumstoffe erreicht werden.

Erfindungsgemäß eingesetzte Polyolformulierungen enthalten weiter mindestens eine, mindestens zwei gegenüber Isocyanaten reaktive Wasserstoffatome aufweisende Verbindungen vom Molekulargewicht 300 bis 800 g/Mol, die erhalten werden durch Polyaddition von Alkylenoxiden wie beispielsweise Ethylenoxid, Propylenoxid, Butylenoxid, Dodecyloxid oder Styroloxid, vorzugsweise Propylenoxid oder Ethylenoxid an aromatische Mono-, Di-, oder Polyamine wie Anilin, Phenylendiamine, Toluylendiamine (2,3-Toluylendiamin, 3,4-Toluylendiamin, 2,4-Toluylendiamin, 2,5-Toluylendiamin, 2,6-Toluylendiamin oder Gemische der genannten Isomeren), 2,2'- Diaminodiphenylmethan, 2,4'- Diaminodiphenylmethan, 4,4'- Diaminodiphenylmethan oder Gemische dieser Isomeren.

Erfindungsgemäß eingesetzte Polyolformulierungen enthalten weiter mindestens eine, mindestens zwei gegenüber Isocyanaten reaktive Wasserstoffatome aufweisende Verbindungen vom Molekulargewicht 200 bis 800 g/Mol, die erhalten werden durch Polyaddition von Alkylenoxiden wie beispielsweise Ethylenoxid, Propylenoxid, Butylenoxid, Dodecyloxid oder Styroloxid, vorzugsweise Propylenoxid oder Ethylenoxid an aromatische Mono-, Di-, oder Polyamine wie Ethylendiamin, Oligomere des Ethylendiamins (beispielsweise Diethylentriamin, Triethylenteramin oder Pentaethylenhexamin), Ethanolamin, Diethanolamin, Triethanolamin, N-Methyl- oder N-Ethyldiethanolamin, 1,3-Propylendiamin, 1,3- bzw. 1,4-Butylendiamin, 1,2-, 1,3-, 1,4-, 1,5-, 1,6-Hexamethylendiamin.

Erfindungsgemäß eingesetzte Polyolformulierungen enthalten weiter eine, mindestens zwei gegenüber Isocyanaten reaktive Wasserstoffatome aufweisende Verbindungen vom Molekulargewicht 500 bis 1 500 g/Mol. Sie werden erhalten durch Polyaddition von Alkylenoxiden wie beispielsweise Ethylenoxid, Propylenoxid, Butylenoxid, Dodecyloxid oder Styroloxid, vorzugsweise Propylenoxid oder Ethylenoxid an Starterverbindungen wie Wasser, Propylenglykol, Ethylenglykol oder Diethylenglykol.

Im erfindungsgemäßen Verfahren können die in der Polyurethanchemie üblichen Katalysatoren verwendet werden. Beispiele für derartige Katylysatoren sind: Triethylendiamin, N,N-Dimethylcyclohexylamin, Tetramethylendiamin, 1-Methyl-4-dimethylaminoethylpiperazin, Triethylamin, Tributylamin, Dimethylbenzylamin, N,N',N"-Tris-(dimethylaminopropyl)-hexahydrotriazin, Dimethylaminopropylformamid, N,N,N',N'-Tetramethylethylendiamin, N,N,N',N'-Tetrametylbutandiarnin, Tetrametylhexandiamin, Pentamethyldiethylentriamin, Tetramethyldiaminoethylether, Dimethylpiperazin, 1,2-Dimethylimidazol, 1-Aza-bicyclo-(3,3,0)-octan, Bis-(dimethylaminopropyl)-harnstoff, N-Methylmorpholin, N-Ethylmorpholin, N-Cyclohexylmorpholin, 2,3-Dimethyl-3,4,5,6,-tetrahydropyrimidin, Triethanolamin, Diethanolamine, Triisopropanolamin, N-Methyldiethanolamin, N-Ethyldiethanolamin, Dimethylethanolamin, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-dimethylaminopropyl)-s-hexahydrotriazin, Tetramethylammoniumhydroxid, Natriumacetat, Kaliumacetat, Natriumhydroxid, oder Gemische dieser oder ähnlicher Katalysatoren.

Die im erfindungsgemäßen Verfahren eingesetzten Polyolformulierungen enthalten 0,5 bis 7,0 Gew.-Teile, vorzugsweise 1,0 bis 3,0 Gew.-Teile Wasser pro 100 Gew.-Teile Polyolkomponente A.

Erfindungsgemäß werden Treibmittel aus der Gruppe der Alkane, insbesondere mit 4 bis 5 C-Atomen, wie z.B. i-Pentan, n-Pentan, n-Butan, Isobutan, 2,2-Dimethylbutan, oder Cycloalkane, insbesondere Cyclopentan oder Cyclohexan, oder Hydrofluorchlorkohlenwasserstoffe, vorzugsweise R 141b (Dichlorfluorethan) oder Hydrofluorkohlenwasserstoffe, vorzugsweise R 245fa sowie Gemische der genannten Treibmittel verwendet.

Als Isocyanat-Komponente sind z. B. aromatische Polyisocyanate, wie sie z.B. von W. Siefken in Justus Liebigs Annalen der Chemie, 562, Seiten 75 bis 136, beschrieben werden, beispielsweise solche der Formel

**Q(NCO)**_{**n**}**,**

in der
- n: 2 bis 4, vorzugsweise 2, und
- Q: einen aliphatischen Kohlenwasserstoffrest mit 2 bis 18, vorzugsweise 6 bis 10, C-Atomen, einen cycloaliphatischen Kohlenwasserstoffrest mit 4 bis 15, vorzugsweise 5 bis 10, C-Atomen, einem aromatischen Kohlenwasserstoffrest mit 8 bis 15, vorzugsweise 8 bis 13, C-Atomen bedeuten, z.B. solche Polyisocyanate, wie sie in der DE-OS 28 32 253, Seiten 10 bis 11, beschrieben werden.

Besonders bevorzugt werden in der Regel die technisch leicht zugänglichen Polyisocyanate, z. B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate "modifizierte Polyisocyanate", insbesondere modifizierte Polyisocyanate, die sich vom 2,4- und 2,6-Toluylendiisocyanat bzw. vom 4,4'- und/oder 2,4'-Diphenylmethandiisocyanat ableiten.

Verwendet werden können auch Prepolymere aus den genannten Isocyanaten und organischen Verbindungen mit mindestens einer Hydroxylgruppe, wie beispielsweise 1 bis 4 Hydroxylgruppen aufweisende Polyol- oder Polyesterkomponenten vom Molekulargewicht 60 bis 1 400.

Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide, können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Farbstoffen und Füllstoffen sowie fiungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl Hanser Verlag, München 1966, z. B. auf den Seiten 121 bis 205, und 2. Auflage 1983, herausgegeben von G. Oertel (Carl Hanser Verlag, München) beschrieben.

Bei der Schaumherstellung wird erfindungsgemäß die Verschäumung in geschlossenen Formen durchgeführt. Dabei wird das Reaktionsgemisch in eine Form eingetragen. Als Formmaterial kommt Metall, z.B. Aluminium, oder Kunststoff, z.B. Epoxiharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine Kompakte Haut und einen zelligen Kern aufweist. Erfindungsgemäß geht man im erstgenannten Fall so vor, daß man in die Form so viel Schäumfähiges Reaktionsgemisch einträgt, daß der gebildete Schaumstoff die Form gerade ausfüllt. Die Arbeitsweise im letztgenannten Fall beteht darin, daß man mehr schäumfähiges Reaktionsgemisch in die Form einträgt, als zur Ausfüllung des Form-innern mit Schaumstoff notwendig ist. Im letzteren Fall wird somit unter "over-charging" gearbeitet, eine derartige Verfahrensweise ist z.B. aus den US-PS 3 178 490 und 3 182 104 bekannt.

Vorzugsweise wird das erfindungsgemäße Verfahren zur Ausschäumung von Hohlräumen von Kühl- und Gefriergeräten verwendet. Selbstverständlich können auch Schaumstoffe durch Blockverschäumung oder nach dem an sich bekannten Doppeltransportverfahren hergestellt werden.

Die nach der Erfindung erhältlichen Hartschaumstoffe finden Anwendung z.B. im Bauwesen sowie für die Dämmung von Fernwärmerohren und Containern.

Gegenstand der Erfindung ist auch die Verwendung der erfindungsgemäß hergestellten Hartschaumstoffe als Zwischenschicht für Verbundelemente und zum Ausschäumen von Hohlräumen im Kühimöbelhaus.

Die folgenden Beispiele sollen die Erfindung erläutern, ohne sie jedoch in ihrem Umfang zu begrenzen.

### Beispiele

Eingesetzte Rohstoffe:
- Polyol A:: Polypropylenoxid/ethylenoxid-Polyether der Molmasse 550 auf Basis Sucrose/Glycerin
- Polyol B:: Polypropylenoxid/ethylenoxid-Polyether der Molmasse 560 auf Basis eines Gemisches aus 2,3- und 3,4-Toluylendiamin
- Polyol C:: Polypropylenoxid-Polyether der Moimasse 540 auf Basis Ethylendiamin
- Polyol D:: Polypropylenoxid-Polyether der Molmasse 900 auf Basis Propylengylkol

Aus den Polyethern A - D wird eine erfindungsgemäße Mischung im Verhältnis 50:25:15:10 (w:w:w:w) hergestellt. Diese Mischung wird gemäß den Rezepturen, die in folgender Tabelle angegeben sind auf einer Hochdruckmaschine HK 270 der Fa. Hennecke bei 20°C zu Poylurethanhartschaumstoffen verarbeitet.
Katalysator: Dimethycyclohexylamin (Bayer AG, Leverkusen)
Silikonstabilisator: handelsüblicher Silikonstabilisator der Fa. Goldschmidt AG, Essen
Cyclopentan: Fa. Erdölchemie, Dormagen
iso-Butan: Fa. Linde AG
iso-Pentan: Fa. Exxon
R 141b: Fa. Solvay
R 245 fa: Fa. Allied Signal
Isocyanat: "polymeres MDI" Desmodur® 44V20 (Bayer AG Leverkusen)

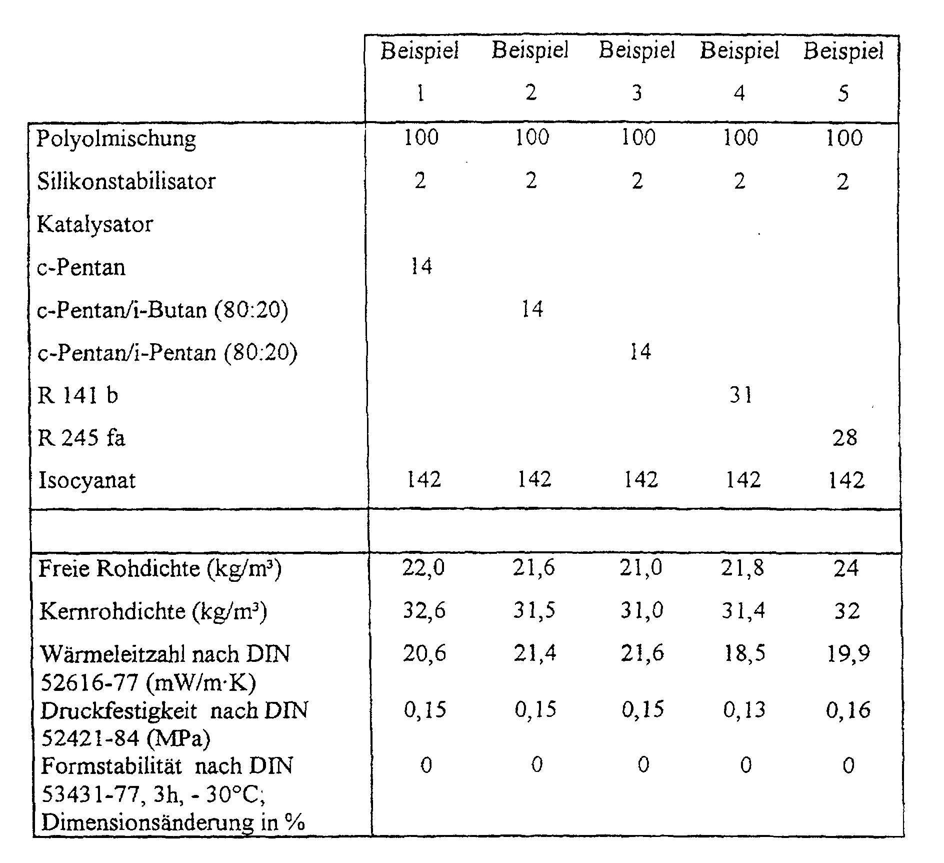

Die Beispiele 1 bis 5 zeigen, daß bei Verschäumung der erfindungsgemäßen Polyolformulierung mit marktüblichen Treibmitteln immer Hartschaumstoffe mit hervorragenden praxisgerechten Eigenschaften erhalten werden; dies bei einer für den Fachmann erkennbar niedrigen Kernrohdichte.

## Patentansprüche

1. Verfahren zur Herstellung von Polyurethan Hartschaumstoffen aus Polyolen und Polyisocyanaten sowie Treibmitteln und gegebenenfalls Schaumhilfsmitteln, **dadurch gekennzeichnet, daß** der Polyurethan Hartschaumstoff erhalten wird durch Umsetzung von
A. einer Polyolkomponente, enthaltend
(1) 40 - 80 Gew.-% eines auf Sucrose oder Sorbitol basierenden Polyethylenoxid/propylenoxidpolyethers der Molmasse 300-800,
(2) 3 - 40 Gew.-% eines auf einem aromatischem Mono-, Di- oder Polyamin basierendem Polyethylenoxid/propylenoxidpolyethers der Molmasse 300 - 800,
(3) 3 - 40 Gew.-% eines auf einem aliphatischem Mono-, Di- oder Polyamin basierendem Polyethylenoxid/propylenoxidpolyethers der Molmasse 200 - 800,
(4) 3 - 40 Gew.-% eines linearen Polyethylenoxid/propylenoxidpolyethers der Molmasse 500 - 1500,
(5) gegebenenfalls weitere, mindestens zwei gegenüber Isocyanaten reaktive Wasserstoffatome aufweisenden Verbindungen vom Molekulargewicht 150 bis 12 500 g/Mol
(6) Katalysatoren,
(7) Wasser,
(8) Treibmitteln aus der Gruppe der Alkane, Cycloalkane, Hydrofluorchlorkohlenwasserstoffe, Hydrofluorkohlenwasserstoffe,
(9) gegenbenenfalls Hilfs- und/oder Zusatzstoffen mit
B. einem organischen und/oder modifizierten organischen Polyisocyanat mit einem NCO-Gehalt von 20 bis 48 Gew.-%.

2. Verfahren zur Herstellung von Polyurethan Hartschaumstoffen gemäß Anspruch 1, **dadurch gekennzeichnet, daß** Komponente (1) ein Sucrose gestarteten Polyether auf Basis von 70 bis 100 Gew.-% 1,2-Propylenoxid und 0 bis 30 Gew.-% Ethylenoxid ist.

3. Verfahren zur Herstellung von Polyurethan Hartschaumstoffen gemäß Anspruch 1, **dadurch gekennzeichnet, daß** Komponente (2) ein auf Basis von 70 bis 100Gew.-% 1,2-Propylenoxid und 0 bis 30 Gew.-% Ethylenoxid gestartetes o-Toluylendiamin ist.

4. Verfahren zur Herstellung von Polyurethan Hartschaumstoffen gemäß Anspruch 1, **dadurch gekennzeichnet, daß** Komponente (3) ein Ethylendiamin gestarteter Polyether auf Basis von 50 bis 100 Gew.-% 1,2-Propylenoxid und 0 bis 50 Gew.-% Ethylenoxid ist.

5. Verfahren zur Herstellung von Polyurethan Hartschaumstoffen gemäß Anspruch 1, **dadurch gekennzeichnet, daß** Komponente (1) ein Sorbitol gestarteter Polyether auf Basis von 70 bis 100 Gew.-% 1,2-Propylenoxid und 0 bis 30 Gew.-% Ethylenoxid ist.

6. Verfahren zur Herstellung von Polyurethan Hartschaumstoffen gemäß Anspruch 1, **dadurch gekennzeichnet, daß** Komponente (4) ein Propylenglykol gestarteter Polyether auf Basis von 70 bis 100 Gew.-% 1,2-Propylenoxid und 0 bis 30 Gew.-% Ethylenoxid ist.

7. Verfahren zur Herstellung von Polyurethan Hartschaumstoffen gemäß einem der Ansprüche 1 bis 6, **dadurch gekennzeichnet, daß** der Wassergehalt 0,5 bis 7,0 Gew.-Teile pro 100 Gew.-Teile Polyolkomponente A beträgt.

8. Verfahren zur Herstellung von Polyurethan Hartschaumstoffen gemäß einem der Ansprüche 1 bis 7, **dadurch gekennzeichnet, daß** als Treibmittel (8) Cyclopentan und/oder Cyclohexan eingesetzt wird.

9. Verfahren zur Herstellung von Polyurethan Hartschaumstoffen gemäß einem der Ansprüche 1 bis 7, **dadurch gekennzeichnet, daß** als Treibmittel (8) Gemische aus n- und/oder i-Pentan und/oder Cyclopentan und/oder Cyclohexan eingesetzt werden.

10. Verfahren zur Herstellung von Polyurethan Hartschaumstoffen gemäß einem der Ansprüche 1 bis 7, **dadurch gekennzeichnet, daß** als Treibmittel (8) Gemische aus Cyclopentan mit n-Butan und/oder Isobutan und/oder 2,2-Dimethylbutan eingesetzt werden.

11. Verfahren zur Herstellung von Polyurethan Hartschaumstoffen gemäß einem der Ansprüche 1 bis 7, **dadurch gekennzeichnet, daß** als Treibmittel (8) n-und/oder i-Pentan verwendet wird.

12. Verfahren zur Herstellung von Polyurethan Hartschaumstoffen gemäß einem der Ansprüche 1 bis 7, **dadurch gekennzeichnet, daß** als Treibmittel (8) 1,1,1-Dichlorfluorethan (R 141 b) oder 1,1,1,3,3-Pentanfluorpropan (R 245fa) eingesetzt wird.

## Claims

1. A method of producing polyurethane rigid foamed materials from polyols and polyisocyanates and from foaming agents and optionally from foaming aids, **characterised in that** the polyurethane rigid foamed material is obtained by the reaction of
A. a polyol component containing
(1) 40 - 80 % by weight of a polyethylene oxide/propylene oxide polyether of molecular weight 300 - 800 which is based on sucrose or sorbitol,
(2) 3 - 40 % by weight of a polyethylene oxide/propylene oxide polyether of molecular weight 300 - 800 which is based on an aromatic mono-, di- or polyamine,
(3) 3 - 40 % by weight of a polyethylene oxide/propylene oxide polyether of molecular weight 200 - 800 which is based on an aliphatic mono-, di- or polyamine,
(4) 3 - 40 % by weight of a linear polyethylene oxide/propylene oxide polyether of molecular weight 500 - 1500,
(5) optionally other compounds of molecular weight 150 to 12,500 g/mole which comprise at least two hydrogen atoms which are reactive towards isocyanates,
(6) catalysts,
(7) water,
(8) foaming agents from the group comprising alkanes, cycloalkanes, hydrochlorofluorocarbons, hydrofluorocarbons, and
(9) optionally adjuvant substances and/or additives
with
B. an organic and/or modified organic polyisocyanate which has an NCO content of 20 to 48 % by weight.

2. A method of producing polyurethane rigid foamed materials according to claim 1, **characterised in that** component (1) is a polyether which is started on sucrose and which is based on 70 to 100 % by weight 1,2-propylene oxide and 0 to 30 % by weight ethylene oxide.

3. A method of producing polyurethane rigid foamed materials according to claim 1, **characterised in that** component (2) is a polyether which is started on o-diaminotoluene and which is based on 70 to 100 % by weight 1,2-propylene oxide and 0 to 30 % by weight ethylene oxide.

4. A method of producing polyurethane rigid foamed materials according to claim 1, **characterised in that** component (3) is a polyether which is started on ethylenediamine and which is based on 50 to 100 % by weight 1,2-propylene oxide and 0 to 50 % by weight ethylene oxide.

5. A method of producing polyurethane rigid foamed materials according to claim 1, **characterised in that** component (1) is a polyether which is started on sorbitol and which is based on 70 to 100 % by weight 1,2-propylene oxide and 0 to 30 % by weight ethylene oxide.

6. A method of producing polyurethane rigid foamed materials according to claim 1, **characterised in that** component (4) is a polyether which is started on propylene glycol and which is based on 70 to 100 % by weight 1,2-propylene oxide and 0 to 30 % by weight ethylene oxide.

7. A method of producing polyurethane rigid foamed materials according to any one of claims 1 to 6, **characterised in that** the water content is 0.5 to 7.0 % by weight per 100 parts by weight of polyol component A.

8. A method of producing polyurethane rigid foamed materials according to any one of claims 1 to 7, **characterised in that** cyclopentane and/or cyclohexane are used as foaming agent (8).

9. A method of producing polyurethane rigid foamed materials according to any one of claims 1 to 7, **characterised in that** mixtures of n- and/or i-pentane and/or cyclopentane and/or cyclohexane are used as foaming agent (8).

10. A method of producing polyurethane rigid foamed materials according to any one of claims 1 to 7, **characterised in that** mixtures of cyclopentane with n-butane and/or isobutane and/or 2,2-dimethylbutane are used as foaming agent (8).

11. A method of producing polyurethane rigid foamed materials according to any one of claims 1 to 7, **characterised in that** n- and/or i-pentane are used as foaming agent (8).

12. A method of producing polyurethane rigid foamed materials according to any one of claims 1 to 7, **characterised in that** 1,1,1-dichlorofluoroethane (R 141 b) or 1,1,1,3,3-pentafluoropropane (R 254fa) are used as foaming agent (8).

## Revendications

1. Procédé pour la préparation de mousses rigides de polyuréthanes à partir de polyols, de polyisocyanates, d'agents porogènes et le cas échéant de produits auxiliaires de gonflement, **caractérisé en ce que** la mousse rigide de polyuréthane est obtenue par réaction de
A. un composant polyol contenant
(1) 40 à 80 % en poids d'un polyéther du type poly(oxyde d'éthylène/oxyde de propylène) à base de saccharose ou de sorbitol, masse moléculaire 300 à 800,
(2) 3 à 40 % en poids d'un polyéther du type poly(oxyde d'éthylène/oxyde de propylène) à base d'une mono-, di- ou poly-amine aromatique, de masse moléculaire 300 à 800,
(3) 3 à 40 % en poids d'un polyéther du type poly(oxyde d'éthylène/oxyde de propylène) à base d'une mono-, di- ou poly-amine aliphatique, de masse moléculaire 200 à 800,
(4) 3 à 40 % en poids d'un polyéther du type poly(oxyde d'éthylène/oxyde de propylène) linéaire de masse moléculaire 500 à 1 500,
(5) le cas échéant d'autres composés à au moins deux atomes d'hydrogène réactifs avec les isocyanates, de poids moléculaire 150 à 12 500 g/mol,
(6) des catalyseurs,
(7) de l'eau,
(8) des agents porogènes du groupe des alcanes, des cycloalcanes, des hydrocarbures hydrofluorochlorés, des hydrocarbures hydrofluores,
(9) le cas échéant des produits auxiliaires et/ou additifs,
avec
B. un polyisocyanate organique et/ou un polyisocyanate organique modifié, à une teneur en NCO de 20 à 48 % en poids.

2. Procédé pour la préparation de mousses rigides de polyuréthanes selon la revendication 1, **caractérisé en ce que** l'on utilise en tant que composant (1) un polyéther condensé sur saccharose, à base de 70 à 100 % en poids d'oxyde de 1,2-propylène et de 0 à 30 % en poids d'oxydé d'éthylène.

3. Procédé pour la préparation de mousses rigides de polyuréthanes selon la revendication 1, **caractérisé en ce que** l'on utilise en tant que composant (2) un polyéther à base de 70 à 100 % en poids d'oxyde de 1,2-propylène et de 0 à 30 % en poids d'oxyde d'éthylène condensé sur o-toluylènediamine.

4. Procédé pour la préparation de mousses rigides de polyuréthanes selon la revendication 1, **caractérisé en ce que** le composant (3) est un polyéther à base de 50 à 100 % en poids d'oxyde de 1,2-propylène et de 0 à 50 % en poids d'oxyde d'éthylène condensé sur éthylènediamine.

5. Procédé pour la préparation de mousses rigides de polyuréthanes selon la revendication 1, **caractérisé en ce que** l'on utilise en tant que composant (1) un polyéther à base de 70 à 100 % en poids d'oxyde de 1,2-propylène et de 0 à 30 % d'oxyde d'éthylène, condensé sur sorbitol.

6. Procédé de préparation de mousses rigides de polyuréthanes selon la revendication 1, **caractérisé en ce que** le composant (4) est un polyéther à base de 70 à 100 % en poids d'oxyde de 1,2-propylène et 0 à 30 % en poids d'oxyde d'éthylène condensé sur propylèneglycol.

7. Procédé de préparation de mousses rigides de polyuréthanes selon l'une des revendications 1 à 6, **caractérisé en ce que** la teneur en eau est de 0,5 à 7,0 parties en poids pour 100 parties en poids du composant polyol A.

8. Procédé pour la préparation de mousses rigides de polyuréthanes selon l'une des revendications 1 à 7, **caractérisé en ce que** l'on utilise en tant qu'agents porogènes (8) le cyclobutane et/ou le cyclohexane.

9. Procédé pour la préparation de mousses rigides de polyuréthanes selon l'une des revendications 1 à 7, **caractérisé en ce que** l'on utilise en tant qu'agents porogènes (8) des mélanges de n- et/ou d'iso-pentane et/ou de cyclopentane et/ou de cyclohexane.

10. Procédé pour la préparation de mousses rigides de polyuréthanes selon l'une des revendications 1 à 7, **caractérisé en ce que** l'on utilise en tant qu'agents porogènes (8) des mélanges de cyclopentane et de n-butane et/ou d'isobutane et/ou de 2,2-diméthylbutane.

11. Procédé pour la préparation de mousses rigides de polyuréthanes selon l'une des revendications 1 à 7, **caractérisé en ce que** l'on utilise en tant qu'agents porogènes (8) le n- et/ou l'iso-pentane.

12. Procédé pour la préparation de mousses rigides de polyuréthanes selon l'une des revendications 1 à 7, **caractérisé en ce que** l'on utilise en tant qu'agent porogène (8) le 1,1,1-dichlorofluoréthane (R 141b) ou le 1,1,1,3,3-pentafluoropropane (R 245fa).
